# EUROPÄISCHE PATENTSCHRIFT

(11) **EP 1 293 363 B1**
(45) Veröffentlichungstag und Bekanntmachung des Hinweises auf die Patenterteilung: **26.09.2007**
(21) Anmeldenummer: 02017008.0
(22) Anmeldetag: 27.07.2002
(51) Int. Cl.: B60D 1/28, B60D 1/52, B60D 1/60, B60D 1/62

(54) **Warneinrichtung für eine Anhängerkupplung und Anhängerkupplung versehen mit einer Warneinrichtung**
Warning device for a trailer hitch and trailer hitch equipped with a warning device
Dispositif avertisseur pour un attelage de remorque et attelage équipé d'un tel dispositif

(30) Priorität: 12.09.2001 DE 10144822
(43) Veröffentlichungstag der Anmeldung: 19.03.2003
(73) Patentinhaber: WESTFALIA - Automotive GmbH, 33378 Rheda-Wiedenbrück (DE)
(72) Erfinder: Abels, Frank O., 29633 Munster (DE)
(74) Vertreter: Reimold, Otto

(56) Entgegenhaltungen:
- EP-A- 1 160 104
- EP-A- 1 197 357
- DE-A- 4 312 208
- DE-A- 10 027 571
- US-A- 3 792 432

## Beschreibung

Die Erfindung betrifft eine Anhängerkupplung, die ein Kopfstück zum lösbaren Befestigen eines Anhängers sowie einen an einem Zugfahrzeug befestigbaren Kupplungshalter aufweist, an dem das Kopfstück zur Einnahme einer Gebrauchslage anordenbar und von dem das Kopfstück bei Nichtgebrauch entfernbar ist, wobei eine Verriegelungseinrichtung zum Verriegeln des Kopfstücks mit dem Kupplungshalter in Gebrauchslage vorgesehen ist. Die Erfindung betrifft ferner eine Warneinrichtung.

Aus der US 3,792,432 ist eine elektrische Warneinrichtung bekannt, die eine sichere Befestigung eines Anhängers an einem Kopfstück einer Anhängerkupplung überwacht. Das Kopfstück ist fest am Zugfahrzeug angeordnet.

Das Kopfstück einer Anhängerkupplung der eingangs genannten Art kann dagegen vom Kupplungshalter entfernt werden, damit es bei Nichtgebrauch am Heck des Zugfahrzeugs nicht stört Beispielsweise ist das Kopfstück in Gebrauchslage an einen Kupplungshalter gesteckt. Eine solche Anhängerkupplung ist z.B. aus DE 43 12 208 A1 bekannt. Das Kopfstück kann auch schwenkbar am Zugfahrzeug gelagert sein und bei Nichtgebrauch in einen Bereich innerhalb der Außenkontur des Zugfahrzeugs, z.B. in Fahrtrichtung vor und/oder unter einen Stoßfänger, geschwenkt werden. Eine solche Anhängerkupplung ist aus der nicht vorveröffentlichten EP 1 160 104 A2 bekannt.

Das Kopfstück steht bei Nichtgebrauch nicht hinter das Heck des Zugfahrzeugs vor, was zum einen ästhetisch ansprechend ist und zum ändern die von einer Anhängerkupplung ausgehenden Gefahr von Kollisionen, beispielsweise beim rückwärts Einparken, verringert.

Nachteilig ist allerdings, dass das korrekte Verriegeln der einer Verriegelungseinrichtung zum Verriegeln des Kopfstücks an dem Kupplungshalter nicht immer gewährleistet ist. Ist die Verriegelungseinrichtung nicht korrekt verriegelt, kann es zu Unfällen kommen, beispielsweise wenn sich das Kopfstück bei angehängtem Anhänger vom Zugfahrzeug löst.

Um das korrekte Verriegeln der Verriegelungseinrichtung zu überprüfen, sind mechanische Anzeigen bekannt. Mechanische Anzeigen sind allerdings aufwändig und teuer und funktionieren nicht immer zuverlässig.

Aufgabe der Erfindung ist es daher, den Benutzer einer Anhängerkupplung der eingangs genannten Art davor zu warnen, wenn eine Verriegelungseinrichtung das Kopfstück am Kupplungshalter nicht korrekt verriegelt.

Diese Aufgabe wird durch eine Anhängerkupplung gemäß der technischen Lehre des Anspruchs 1 gelöst. Die Aufgabe wird ferner durch eine Warneinrichtung gemäß der technischen Lehre eines weiteren unabhängigen Anspruchs gelöst.

Die Warneinrichtung wird beispielsweise über eine eigene Stromquelle mit elektrischem Strom versorgt, so dass sie vom Bordnetz des Zugfahrzeugs unabhängig arbeitet. Eine Verbindung zum Bordnetz des Zugfahrzeugs ist nicht unbedingt erforderlich, wobei keine Modifikationen am Bordnetz des Zugfahrzeuges erforderlich sind. Die Warneinrichtung kann daher sogar an eine vorhandene Anhängerkupplung nachgerüstet werden ohne das Modifikationen am Bordnetz des Zugfahrzeugs notwendig sind.

Erfindungsgemäß ist jedoch auch vorgesehen, dass der Warneinrichtung eine externe Stromquelle zugeordnet ist. Die externe Stromquelle kann beispielsweise eine zugfahrzeugseitig angeordnete, der Anhängerkupplung zugeordnete Batterie sein oder durch das Bordnetz des Zugfahrzeugs gebildet werden. Sofern die Warneinrichtung am Kopfstück angeordnet ist, sind beispielsweise Anschlusskontakte am Kupplungshalter und am Kopfstück angeordnet, über die die Warneinrichtung mit der externen Stromquelle verbindbar ist, wenn das Kopfstück zur Einnahme der Gebrauchslage am Kupplungshalter angeordnet wird.

Jedenfalls gibt die Warneinrichtung eine für die Bedienperson der Anhängerkupplung deutlich wahrnehmbare optische und/oder akustische Warnung aus, beispielsweise ein Blinklicht bzw. einen Warnton. Der mindestens eine Sensor ermittelt die Verriegelungsstellung der Verriegelungseinrichtung zuverlässig und ist im Gegensatz zu einer mechanischen Warneinrichtung gegen Verschmutzung wesentlich unempfindlicher. Es versteht sich, dass bei mehreren Sensoren die Zuverlässigkeit der Warneinrichtung weiter erhöht ist.

Vorteilhafte Weiterbildungen der Erfindung ergeben sich aus den abhängigen Ansprüchen sowie aus der Beschreibung.

Zweckmäßigerweise enthält die Stromquelle der Warneinrichtung eine Langzeitbatterie. Besonders vorteilhaft hat sich hierfür eine Lithiumbatterie erwiesen. Eine Langzeitbatterie, beispielsweise eine Lithiumbatterie, kann bei dem verhältnismäßig geringen Strombedarf der Warneinrichtung ohne weiteres 10 bis 15 Jahre oder sogar noch länger halten, so dass die Warneinrichtung ohne Ersatz der Stromquelle durch eine neue Stromquelle während einer üblichen Nutzungszeit der Anhängerkupplung betriebsbereit ist.

Es kann als Stromquelle der Warneinrichtung auch ein Akkumulator vorgesehen sein. Der Akkumulator wird vorzugsweise in Gebrauchslage des Kopfstücks beispielsweise durch das Bordnetz des Zugfahrzeugs gespeist und aufgeladen. In jedem Fall steigert eine eigens bei der Warneinrichtung vorgesehene Stromquelle, insbesondere eine in die Warneinrichtung integrierte Stromquelle, die Zuverlässigkeit der Warneinrichtung, da dann für deren Betrieb, also gegebenenfalls die Ausgabe der Warnung, nicht unbedingt eine Verbindung zu einer externen Stromquelle, insbesondere zum Bordnetz des Zugfahrzeugs, notwendig ist.

Zur Einnahme der Gebrauchslage kann das Kopfstück an den Kupplungshalter steckbar oder schwenkbar sein. Auch eine Kombination von Schwenken und Stecken ist denkbar. Dabei können auch motorische oder sonstige mechanische Hilfsmittel, beispielsweise ein Elektromotor bzw. eine Federanordnung, den Bediener der Anhängerkupplung beim Bewegen des Kopfstücks an den Kupplungshalter unterstützen.

Die Verriegelungseinrichtung kann am Kopfstück oder am Kupplungshalter angeordnet sein. Es versteht sich, dass auch Teile der Verriegelungseinrichtung, beispielsweise Verriegelungsbolzen, am Kopfstück, und andere Teile, beispielsweise Ausnehmungen für die Verriegelungsbolzen, am Kupplungshalter angeordnet sein können. Insbesondere bei einem schwenkbaren Kopfstück kann an diesem beispielsweise eine Verriegelungsscheibe mit einer oder mehreren Ausnehmungen angeordnet sein. Die Verriegelungsscheibe wird beim Schwenken des Kopfstücks mitgeschwenkt, so dass in die Ausnehmungen am Kupplungshalter oder an einem sonstigen zugfahrzeugseitigen Teil der Anhängerkupplung angeordnete Verriegelungsbolzen oder -haken in der Gebrauchslage und/oder der Nichtgebrauchslage eindringen oder einrasten können.

Die Warneinrichtung weist vorteilhaft eine Aktivierungseinrichtung zum Aktivieren des Sensors bei am Kupplungshalter in Gebrauchslage befindlichem Kopfstück, insbesondere bei an den Kupplungshalter gestecktem oder geschwenktem Kopfstück, auf. Wenn sich das Kopfstück nicht in Gebrauchslage befindet, beispielsweise im Gepäckraum des Zugfahrzeugs verstaut oder unter das Zugfahrzeug geschwenkt ist, deaktiviert die Aktivierungseinrichtung den Sensor, so dass dieser keine unerwünschte Warnung ausgibt.

Der Betrieb der mit einer Aktivierungseinrichtung ausgestatteten Warneinrichtung gestaltet sich folgendermaßen: Das Kopfstück wird in Gebrauchlage am Kupplungshalter gebracht, beispielsweise an den Kupplungshalter gesteckt oder geschwenkt, und bereits bevor es seine Endlage erreicht, bei der die Verriegelungseinrichtung verriegeln kann, gibt der Sensor eine Warnung aus. Dies ist zugleich ein Funktionstest für die Warneinrichtung. Bei Erreichen der Endlage des Kopfstücks am Kupplungshalter wird die Verriegelungseinrichtung verriegelt. Der Sensor erfasst die Verriegelungsstellung und beendet die Ausgabe der Warnung.

Zur Senkung des Energieverbrauchs der Warneinrichtung, insbesondere zur Verlängerung der Lebensdauer der in die Warneinrichtung integrierten Stromquelle, ist vorteilhaft vorgesehen, dass der mindestens eine Sensor durch die Aktivierungseinrichtung zur Aktivierung mit der Stromquelle verbindbar und zum Inaktivschalten von der Stromquelle trennbar ist. Prinzipiell wäre es aber auch denkbar, dass der Sensor auch im inaktivierten Zustand mit der Stromquelle verbunden bleibt und dabei in einer Art Stand-by-Betrieb arbeitet.

Zweckmäßigerweise enthält die Aktivierungseinrichtung einen durch den Kupplungshalter betätigbaren Schalter, beispielsweise einen Schließer-Schalter, der bei in Gebrauchslage befindlichem, z.B. bei an dem Kupplungshalter gestecktem oder geschwenktem, Kopfstück betätigt ist und zwar bereits dann, wenn sich die Verriegelungseinrichtung noch außerhalb der Verriegelungsstellung befindet.

Die Aktivierungseinrichtung kann vorteilhaft auch einen Neigungsschalter zum Erfassen der Neigung des Kopfstücks aufweisen. Der Neigungsschalter aktiviert den Sensor in einem Neigungsbereich des Kopfstücks, in dem sich dieses bei typischem Gebrauch der Anhängerkupplung befindet. Der Neigungsschalter kann zur Erfassung einer oder mehreren Neigungsebenen des Kopfstücks ausgestaltet sein, beispielsweise einer Drehlage des Kopfstücks und/oder einer Neigung des Kopfstücks nach vorn oder hinten z.B. mit Bezug zur Zugfahrzeug-Längsachse.

Zweckmäßigerweise beträgt der Neigungsbereich etwa 30°, wobei sich das am Kupplungshalter in Gebrauchslage befindliche Kopfstück in der Mittellage des Neigungsbereichs befindet, wenn das Zugfahrzeug auf einer horizontalen Ebene steht. Es versteht sich, dass je nach Anwendungsfall auch andere Neigungsbereiche denkbar sind, beispielsweise größere Neigungsbereiche, wenn die Anhängerkupplung für ein Geländefahrzeug vorgesehen ist.

Vorteilhaft ist der Sensor durch ein Bedienelement der Verriegelungseinrichtung betätigbar, wobei das Bedienelement in der Verriegelungsstellung der Verriegelungseinrichtung den Sensor betätigt. Das Bedienelement kann beispielsweise eine Verriegelungswelle sein. Wesentlich ist allerdings, dass das Bedienelement nur dann eine Stellung einnimmt, bei der der Sensor keine Warnung ausgibt, wenn sich eines oder mehrere zwischen Kopfstück und Kupplungshalter angeordnete, durch das Bedienelement betätigbare Verriegelungselemente der Verriegelungseinrichtung zuverlässig in Verriegelungsstellung befinden. Es muss also zumindest in der Verriegelungsstellung eine mechanische Kopplung zwischen dem Bedienelement und den Verriegelungselementen gegeben sein.

Vorteilhaft ist vorgesehen, dass der Sensor durch axiales Verstellen des Bedienelements betätigbar ist. Es versteht sich, dass auch andere Verstell-Bewegungen des Bedienelements durch den Sensor erfassbar sein können.

Vorzugsweise ist das Bedienelement eine das Kopfstück durchgreifende Verriegelungswelle, wobei an einem Ende dieser Verriegelungswelle eine Handhabe zum Betätigen der Verriegelungswelle, beispielsweise ein Bedienknebel, und an deren anderen Ende der Sensor angeordnet ist. Dieser wird durch axiale Verstellung der Verriegelungswelle betätigt.

Ein besonders einfacher, jedoch funktionssicherer Aspekt der Erfindung sieht vor, dass der mindestens eine Sensor einen durch die Verriegelungseinrichtung betätigbaren elektrischen Schalter aufweist.

Dieser Schalter ist vorzugsweise ein sogenannter Öffner, der in der Verriegelungsstellung der Verriegelungseinrichtung zum Abschalten der Warnung öffnet. Solange die verriegelungseinrichtung die Verriegelungsstellung noch nicht erreicht hat, ist der Schalter geschlossen und dementsprechend wird die Warnung ausgegeben.

Zur Erzeugung der Warnung ist vorzugsweise ein Warngenerator vorgesehen. Der Warngenerator kann beispielsweise ein Tongenerator und/oder eine Warnleuchtenanordnung enthalten.

Der Tongenerator kann beispielsweise ein Pfeiftongenerator und/oder ein Sprachgenerator sein. Als Warnleuchtenanordnung sind beispielsweise eine Warnleuchte und/oder eine Leuchtdiodenanordnung vorteilhaft.

Der Warneinrichtung ist zweckmäßigerweise eine abgesetzte, innerhalb des Zugfahrzeugs angeordnete Ausgabeeinrichtung zur Ausgabe der optischen und/oder akustischen Warnung zugeordnet. Dabei kann die Ausgabeeinrichtung beispielsweise durch den Warngenerator gebildet werden oder eine separate, zum Warngenerator zusätzliche Ausgabeeinrichtung sein, wobei im letzteren Fall je eine Warnung einerseits unmittelbar an der Anhängerkupplung und andererseits im Zugfahrzeug ausgebbar ist. Beispielsweise kann die abgesetzte Ausgabeeinrichtung eine im Gepäckraum oder Armaturenbereich des Zugfahrzeugs angeordnete Warnleuchte und/oder ein dort platzierter Warnsummer sein.

Der mindestens eine Sensor kann sowohl am Kopfstück als auch am Kupplungshalter oder einem sonstigen zugfahrzeugseitigen Teil der Anhängerkupplung angeordnet sein. Es ist auch möglich, dass beispielsweise ein Sensor der Warneinrichtung am Kopfstück und ein Sensor der Warneinrichtung am Kupplungshalter angeordnet ist.

Die Warneinrichtung ist zweckmäßigerweise ein an dem Kopfstück anordenbares Modul. Auf diese Weise kann sie ohne weiteres an ein vorhandenes Kopfstück nachgerüstet werden. Auch ein Austausch im Falle eines Defektes ist damit leicht möglich. Es versteht sich allerdings, dass die Warneinrichtung und das Kopfstück auch eine Baueinheit bilden können.

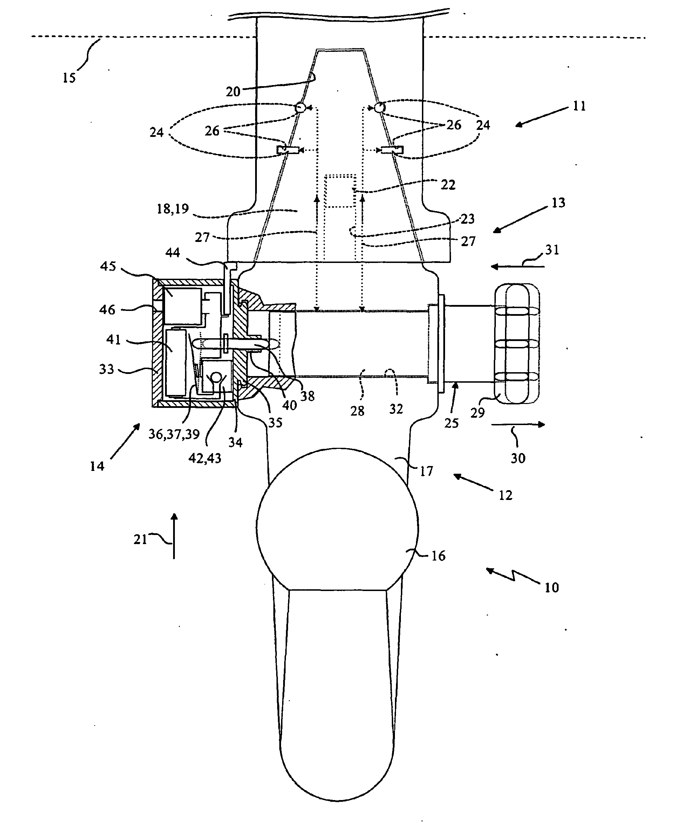

Im Folgenden wird die Erfindung anhand eines Ausführungsbeispiels unter Bezugnahme auf die einzige Figur näher erläutert.

Die Figur zeigt eine Anhängerkupplung 10 mit einem Kupplungshalter 11, mit dem ein Kopfstück 12 zusammengesteckt ist, in einer Ansicht von oben, wobei manche Teile der Anhängerkupplung 10 geschnitten und manche Teile schematisch dargestellt sind.

Das Kopfstück 12 ist mittels einer Verriegelungseinrichtung 13 am Kupplungshalter 11 verriegelt. Eine Warneinrichtung 14 gibt einen Warnung aus, wenn die Verriegelungseinrichtung 13 nicht korrekt verriegelt ist.

Der Kupplungshalter 11 ist im Heckbereich an einem Zugfahrzeug 15 angeordnet. Er ist beispielsweise an einem Querträger befestigt, der sich unterhalb eines nicht dargestellten Stoßfängers des Zugfahrzeugs 15 befindet. Der Kupplungshalter 11 kann vor einen Stoßfänger des Zugfahrzeugs 15 (mit Bezug auf dessen Vorwärtsfahrtrichtung) vorversetzt sein.

Bei dem Kopfstück 12 ist ein Kupplungskopf 16 am freien Ende eines Kupplungsarms 17 angeordnet. Der Kupplungsarm 17 ist zu diesem freien Ende hin beispielsweise nach oben gekrümmt. Am Kupplungskopf 16 kann ein Anhänger lösbar befestigt werden.

Am dem Kupplungskopf 16 entgegengesetzten Ende 18 des Kopfstücks 12 ist ein Steckteil 19 angeordnet, das im gezeigten montierten Zustand der Anhängerkupplung 10 in eine Aufnahmeöffnung 20 des Kupplungshalters 11 gesteckt ist. Das Steckteil 19 weist vorliegend eine konische Außenkontur, die Aufnahmeöffnung 20 eine mit dieser korrelierende Innenkontur auf. Die Aufnahmeöffnung 20 ist zu der dem Zugfahrzeug 15 abgewandten Seite hin offen.

Es versteht sich, dass auch geometrisch anders gestaltete Steck- oder Schraubteile am Kopfstück sowie jeweils mit diesen korrelierende Aufnahmeöffnungen am Kupplungshalter denkbar sind. Ferner könnte auch am Kupplungshalter ein Steckteil angeordnet sein, auf welches das Kopfstück mittels einer entsprechenden Aufnahmeöffnung aufsteckbar ist.

Das Kopfstück 12 wird mit Bezug auf das Zugfahrzeug 15 von hinten her (angedeutet durch Pfeil 21) in den Kupplungshalter 11 eingesteckt und durch die Verriegelungseinrichtung 13 verriegelt. Beim Einstecken des Steckteils 19 greift ein Nutenstück 22 in eine Nut 23 ein, so dass das Kopfstück 12 gegen Verdrehen in dem Kupplungshalter 11 gesichert ist. Das Nutenstück 22 ist beispielsweise am Steckteil 19, die Nut 23 in der Aufnahmeöffnung 20 angeordnet oder umgekehrt. Das Nutenstück 22 bildet im Zusammenwirken mit der Nut 23 eine Verdrehsicherung. Es können auch mehrere derartige - oder auch anders gestaltete - Verdrehsicherungen am Kopfstück 12 bzw. am Kupplungshalter 11 vorgesehen sein.

Die Verriegelungseinrichtung 13 verriegelt mit Verriegelungselementen 24 das Steckteil 19 in der Aufnahmeöffnung 20. Die Verriegelungselemente können beispielsweise durch am Steckteil 19 angeordnete Kugeln, Bolzen oder dergleichen gebildet sein, die in Verriegelungsstellung der Verriegelungseinrichtung 13 in Aufnahmen 26 eingreifen, die an der Aufnahmeöffnung 20 angeordnet sind.

Die Verriegelungselemente 24 sind durch ein Bedienelement 25 beispielsweise mittels eines nicht dargestellten Umlenkgetriebes betätigbar. Die Wirkung des Bedienelements 25 auf die Verriegelungselemente 24 und/oder die Rückwirkung der Verriegelungselemente 24 auf das Bedienelement 25 ist durch gestrichelte Wirklinien 27 angedeutet.

Das Bedienelement 25 enthält vorliegend eine verriegelungswelle 28, die den Kupplungsarm 17 zwischen Kupplungskopf 16 und Steckteil 19 in Querrichtung durchdringt. An einem Ende der Verriegelungswelle 28 sitzt eine als Handhabe dienende Griffpartie 29. Durch axiales Verstellen und/oder Drehen der Verriegelungswelle 28 wird die Verriegelungseinrichtung 13 verriegelt oder entriegelt.

Sowohl für das Verriegeln als auch für das Entriegeln kann eine Bedienhandlung eines Bedieners am Bedienelement 25 notwendig sein. Bei der vorliegenden Verriegelungseinrichtung 13 jedoch geschieht nur das Entriegeln (angedeutet durch einen Pfeil 30) durch eine aktive Bedienhandlung, das Verriegeln (angedeutet durch einen Pfeil 31) hingegen erfolgt sozusagen automatisch beim Einstecken des Kopfstücks 12 in den Kupplungshalter 11.

Beim Entriegeln wird die Verriegelungswelle 28 entgegen einer Federkraft aus dem Kupplungsarm 17 seitlich herausgezogen, wobei die Verriegelungselemente 24 aus den Aufnahmen 26 herausbewegt werden. Die Entriegelungsstellung des Bedienelements 25 ist in punktierten Linien gezeigt. Die Verriegelungseinrichtung 13 bleibt in Entriegelungsstellung so lange, bis das Kopfstück 12 wieder in den Kupplungshalter 11 eingesteckt wird.

Die Verriegelungseinrichtung 13 verriegelt beim Einstecken des Kopfstücks 12 in den Kupplungshalter 11, beispielsweise unter Mitwirkung der vorgenannten Federkraft. Beim Verriegeln dringen die Verriegelungselemente 24 in die Aufnahmen 26 ein und zugleich wird die Verriegelungswelle 28 axial in Pfeilrichtung 31 bewegt. Wenn die Verriegelungselemente 24 vollständig in die Aufnahmen 26 eingedrungen sind, die Verriegelungseinrichtung 13 mithin ihre Verriegelungsstellung erreicht hat, befindet sich die Verriegelungswelle 28 in der in der Figur gezeigten Verriegelungsstellung. Vorliegend besteht demnach eine feste Zuordnung zwischen der Verriegelungsstellung der Verriegelungselemente 26 und der Verriegelungsstellung des Bedienelementes 25.

Die Verriegelungsstellung der Verriegelungseinrichtung 13 wird durch die Warneinrichtung 14 erfasst. Die Warneinrichtung 14 ist im Bereich des der Griffpartie 29 entgegengesetzten Endes der Verriegelungswelle 28 am Kupplungsarm 12 angeordnet. Die Warneinrichtung 14 ist vorliegend als Modul ausgestaltet, das beispielsweise nachträglich an dem Kopfstück 12 angeordnet werden kann. Sie ist beispielsweise anstelle einer Abdeckkappe am Kopfstück 12 angeordnet, die an sich zum Verschließen einer für die Verriegelungswelle 28 am Kopfstück 12 vorgesehenen Durchgangsbohrung 32 dient.

Die Warneinrichtung 14 enthält ein Gehäuse 33, beispielsweise aus Kunststoff. An einer im montierten Zustand der Durchgangsbohrung 32 zugewandten Gehäusewand 34 ist ein Verbindungselement 35 angeordnet. Das Verbindungselement 35 dient zum Verbinden der Warneinrichtung 14 mit dem Kopfstück 12 und enthält beispielsweise einen vor der Wand 34 angeordneten, radial vorstehenden Befestigungsring, der in eine am offenen Ende der Durchgangsbohrung 32 angeordnete Ringnut eingreift. Die Warneinrichtung 14 kann auch in sonstiger Weise am Kopfstück 12 befestigt sein, beispielsweise angeklebt und/oder angeschraubt und/oder angesteckt.

Ein Sensor 36 der Warneinrichtung 14 ermittelt die Verriegelungsstellung der Verriegelungseinrichtung 13 und tastet hierfür vorliegend die entsprechende Stellung des Bedienelements 25 ab. Ein Schalter 37 des Sensors 36 ist in der Verriegelungsstellung der Verriegelungseinrichtung 13 geöffnet und ansonsten geschlossen. Der Schalter 37 wird durch ein Abtastelement 38 betätigt, das auf eine Federzunge 39 des Schalters 37 wirkt.

Das Abtastelement 38 ist vorliegend als eine Art Stift ausgestaltet, der die Wand 34 durchdringt und an dieser mit axialem Spiel beweglich gelagert ist. Das Abtastelement 38 steht vor die Wand 34 zur Verriegelungswelle 28 hin vor und ist von dieser entgegen der Federkraft der Federzunge 39 in Pfeilrichtung 31 betätigbar, wobei der Schalter 37 öffnet. An der Wand 34 ist ein vorliegend vom Abtastelement 38 durchdrungener Anschlag 40 für die Verriegelungswelle 28 angeordnet, der die Eindringtiefe des Abtastelements 38 in das Gehäuse 33 begrenzt.

Es versteht sich, dass der Sensor 36 zur Ermittlung der jeweiligen Stellung der Verriegelungseinrichtung 13, beispielsweise des Bedienelements 25 und/oder der Verriegelungselemente 24, sonstige Sensorelemente enthalten kann, beispielsweise optische und/oder elektroakustische und/oder magnetische Sensorelemente.

Der Sensor 36 wird durch eine Stromquelle 41, bei der es sich beispielsweise um eine Lithiumbatterie oder eine sonstige langlebige Stromquelle handelt, mit elektrischem Strom versorgt und ist mit dieser elektrisch verbunden.

Vorliegend wird der Sensor 36 durch eine Aktivierungseinrichtung 42 aktiviert, wenn das Kopfstück 12 an den Kupplungshalter 11 gesteckt wird. Die Aktivierungseinrichtung 42 enthält in der vorliegenden Ausführung einen Neigungsschalter 43 sowie einen Druck-Schalter 44, die in Reihe mit der Stromquelle 41 sowie dem Sensor 36 geschaltet sind und diesen zur Inaktivierung jeweils von der Stromquelle 41 elektrisch trennen. Es versteht sich, dass für die Funktion der Aktivierungseinrichtung 42 prinzipiell nur ein einziges Aktivierungselement, beispielsweise nur einer der Schalter 43, 44, erforderlich ist.

Der Neigungsschalter 43 aktiviert den Sensor 36, d.h., beim Ausführungsbeispiel verbindet er ihn mit der Stromquelle 41, wenn sich das Kopfstück 12 in einem vorbestimmten Neigungsbereich befindet. Die Mittellage des Neigungsbereichs wird dadurch definiert, dass das Zugfahrzeug 15 auf einer horizontalen Ebene steht, wenn das Kopfstück 12 an den Kupplungshalter 11 gesteckt ist. Der Neigungsschalter 43 befindet sich dann in Schließstellung und verbindet die Stromquelle 41 mit dem Sensor 36.

Der Druck-Schalter 44 steht zum Kupplungshalter 11 hin vor das Gehäuse 33 vor und wird durch diesen betätigt, wenn das Kopfstück 12 in den Kupplungshalter 11 eingesteckt wird. Dabei aktiviert der Schalter 44 den Sensor 36 bereits dann, wenn die Verriegelungseinrichtung 13 noch nicht verriegelt ist.

Vor dem vollständigen Verriegeln der Verriegelungseinrichtung 13 ist der Sensor-Schalter 37 noch geschlossen, so dass Strom von der Stromquelle 41 über den Neigungsschalter 43, den Sensor-Schalter 37, und den Druck-Schalter 44 zu einem Warngenerator 45 fließen kann. Der Warngenerator 45 erzeugt dann eine optische und/oder akustische Warnung, beispielsweise ein Warn-Blinklicht bzw. einen Warnton. Die vom Warngenerator 45 erzeugte Warnung kann durch eine Öffnung 46 aus dem Gehäuse 33 nach außen gelangen und von einem Bediener der Anhängerkupplung 10 wahrgenommen werden. Wenn die Verriegelungseinrichtung 13 die Verriegelungsstellung erreicht, mithin das Bedienelement 25 die Verriegelungsstellung erreicht, wird der Sensor-Schalter 37 geöffnet und der Warngenerator 45 abgeschaltet.

Aus Sicht des Bedieners der Anhängerkupplung 10 gestaltet sich das Montieren des Kopfstücks 12 am Kupplungshalter 11 folgendermaßen: Beim Einstecken des Kopfstücks 12 in den Kupplungshalter 11 aktiviert die Aktivierungseinrichtung 42 den Sensor 36, wobei eine optische/akustische Warnung erzeugt wird. Der Bediener erkennt daran, dass die Warneinrichtung 14 funktionsfähig ist. Wenn die Verriegelungseinrichtung 13 verriegelt, vorliegend die Verriegelungselemente 24 in die Aufnahmen 26 eingreifen oder einrasten, wird die Verriegelungswelle 28 durch die Federkraft in Richtung 31 bewegt, wobei der Sensor-Schalter 37 öffnet und die Warnung abgeschaltet wird. Am Abschalten der Warnung erkennt der Bediener, dass das Kopfstück 12 sicher am Kupplungshalter 11 verriegelt ist.

Weitere Varianten der Erfindung sind ohne weiteres möglich:

Beispielsweise könnte die Warneinrichtung die Verriegelungsstellung eines oder mehrerer Verriegelungselemente erfassen. Dabei kann eine logische UND-Verknüpfungen vorgesehen sein, bei der die Warnung nur dann nicht ausgegeben wird, wenn alle Verriegelungselemente und, bei der Abtastung des Bedienelementes, das Bedienelement in ihrer jeweiligen Verriegelungsstellung sind.

Es könnte ein Zeitglied vorgesehen sein, das die Ausgabe der Warnung für eine vorbestimmte Zeit verlängert. Die zeitlich verlängerte Warnung kann von einem Bediener auch bei schnellem Einstecken des Kopfstücks 12 in den Kupplungshalter 11 zuverlässig erkannt werden.

Die Warneinrichtung könnte auch ein positives Quittungs-Signal, zumindest für eine vorbestimmte Zeit, ausgeben, wenn das Kopfstück am Kupplungshalter korrekt verriegelt ist. Beispielsweise könnte für eine vorbestimmte Zeit eine beispielsweise grüne Quittungsleuchte aufleuchten und/oder ein Sprachgenerator eine Meldung "korrekt eingerastet" ausgeben.

## Patentansprüche

1. Anhängerkupplung mit einem Kopfstück (12) zum lösbaren Befestigen eines Anhängers, wobei das Kopfstück (12) an einem an einem Zugfahrzeug (15) befestigbaren Kupplungshalter (11) zur Einnahme einer Gebrauchslage anordenbar und von dem Kupplungshalter (11) bei Nichtgebrauch entfernbar ist, und wobei die Anhängerkupplung eine Verriegelungseinrichtung (13) zum Verriegeln des Kopfstücks (12) mit dem Kupplungshalter (11) in Gebrauchslage aufweist, **dadurch gekennzeichnet, dass** sie eine Warneinrichtung mit mindestens einem Sensor (36) zum Ermitteln der Verriegelungsstellung der Verriegelungseinrichtung (13) aufweist, dass der mindestens eine Sensor (36) zur Versorgung mit elektrischem Strom eine elektrische Stromquelle (41) aufweist oder dem mindestens einen Sensor (36) eine externe elektrische Stromquelle zugeordnet ist, und dass durch den mindestens einen Sensor (36) eine optische und/oder akustische Warnung erzeugbar ist, wenn sich die Verriegelungseinrichtung (13) bei in Gebrauchslage am Kupplungshalter (11) befindlichem Kopfstück (12) außerhalb der Verriegelungsstellung befindet.

2. Anhängerkupplung nach Anspruch 1, **dadurch gekennzeichnet, dass** die Stromquelle (41) eine Langzeit-Batterie, insbesondere eine Lithium-Batterie, enthält.

3. Anhängerkupplung nach Anspruch 1 oder 2, **dadurch gekennzeichnet, dass** das Kopfstück (12) zur Einnahme der Gebrauchslage an den Kupplungshalter (11) steckbar oder schwenkbar oder steck- und schwenkbar ist.

4. Anhängerkupplung nach einem der vorhergehenden Ansprüche, **dadurch gekennzeichnet, dass** sie eine Aktivierungseinrichtung (42) zum Aktivieren des mindestens einen Sensors (36) bei am Kupplungshalter (11) in Gebrauchslage befindlichem Kopfstück (12) aufweist.

5. Anhängerkupplung nach Anspruch 4, **dadurch gekennzeichnet, dass** der mindestens eine Sensor (36) durch die Aktivierungseinrichtung (42) zur Aktivierung mit der Stromquelle (41) verbindbar und zum inaktiv Schalten von der Stromquelle (41) trennbar ist.

6. Anhängerkupplung nach Anspruch 4 oder 5, **dadurch gekennzeichnet, dass** die Aktivierungseinrichtung (42) einen durch den Kupplungshalter (11) betätigbaren Schalter (44) enthält, der bei an dem Kupplungshalter (11) in Gebrauchslage befindlichem Kopfstück (12) betätigt ist, auch wenn sich die Verriegelungseinrichtung (13) außerhalb der Verriegelungsstellung befindet.

7. Anhängerkupplung nach einem der Ansprüche 4 bis 6, **dadurch gekennzeichnet, dass** die Aktivierungseinrichtung (42) einen Neigungsschalter (43) zum Erfassen der Neigung des Kopfstücks (12) aufweist, wobei der Neigungsschalter (43) den mindestens einen Sensor (36) in einem Neigungsbereich des Kopfstücks (12) aktiviert, in dem sich das am Kupplungshalter (11) in Gebrauchslage befindliche Kopfstück (12) bei typischem Gebrauch der Anhängerkupplung (10) befindet.

8. Anhängerkupplung nach Anspruch 7, **dadurch gekennzeichnet, dass** der Neigungsbereich etwa 30 Grad beträgt und dass das am Kupplungshalter (11) in Gebrauchslage befindliche Kopfstück (12) sich in der Mittelage des Neigungsbereichs befindet, wenn das Zugfahrzeug (15) auf einer horizontalen Ebene steht.

9. Anhängerkupplung nach einem der vorhergehenden Ansprüche, **dadurch gekennzeichnet, dass** der mindestens eine Sensor (36) durch ein Bedienelement (25), insbesondere eine Verriegelungswelle (28), der Verriegelungseinrichtung (13) betätigbar ist, wobei das Bedienelement (25) in der Verriegelungsstellung der Verriegelungseinrichtung (13) den mindestens einen Sensor (36) betätigt.

10. Anhängerkupplung nach Anspruch 9, **dadurch gekennzeichnet, dass** der mindestens eine Sensor (36) durch axiales Verstellen (30, 31) des Bedienelements (25) betätigbar ist.

11. Anhängerkupplung nach Anspruch 9, **dadurch gekennzeichnet, dass** das Bedienelement (25) eine das Kopfstück (12) durchgreifende Verriegelungswelle (28) ist, dass an einem Ende der Verriegelungswelle (28) eine Handhabe (29) zum Betätigen der Verriegelungswelle (28) und an deren anderem Ende der mindestens eine Sensor (36) angeordnet ist, und dass der mindestens eine Sensor (36) durch axiale Verstellung der Verriegelungswelle (28) betätigbar ist.

12. Anhängerkupplung nach einem der vorhergehenden Ansprüche, **dadurch gekennzeichnet, dass** der mindestens eine Sensor (36) einen durch die Verriegelungseinrichtung (13) betätigbaren elektrischen Schalter (37) aufweist.

13. Anhängerkupplung nach Anspruch 12, **dadurch gekennzeichnet, dass** der Schalter (37) ein Öffnerschalter ist, der in der Verriegelungsstellung der Verriegelungseinrichtung (13) zum Abschalten der Warnung öffnet.

14. Anhängerkupplung nach einem der vorhergehenden Ansprüche, **dadurch gekennzeichnet, dass** sie zur Erzeugung der Warnung einen Warngenerator (45), insbesondere einen Tongenerator oder eine Warnleuchtenanordnung, aufweist.

15. Anhängerkupplung nach Anspruch 14, **dadurch gekennzeichnet, dass** der Warngenerator (45) ein Summ- oder Pfeiftongenerator und/oder einen Sprachgenerator enthält.

16. Anhängerkupplung nach Anspruch 14 oder 15, **dadurch gekennzeichnet, dass** der Warngenerator (45) eine Warnleuchte und/oder eine Leuchtdiodenanordnung enthält.

17. Anhängerkupplung nach einem der vorhergehenden Ansprüche, **dadurch gekennzeichnet, dass** der Warneinrichtung eine abgesetzte, am Zugfahrzeug, insbesondere innerhalb des Zugfahrzeugs, angeordnete Ausgabeeinrichtung zur Ausgabe der optischen und/oder akustischen Warnung zugeordnet ist.

18. Anhängerkupplung nach einem der vorhergehenden Ansprüche, **dadurch gekennzeichnet, dass** der mindestens eine Sensor (36) am Kopfstück (12) oder am Kupplungshalter (11) angeordnet oder anzuordnen ist.

19. Anhängerkupplung nach einem der vorhergehenden Ansprüche, **dadurch gekennzeichnet, dass** die Warneinrichtung als ein an dem Kopfstück (12) anordenbares Modul ausgestaltet ist.

20. Anhängerkupplung nach einem der vorhergehenden Ansprüche, **dadurch gekennzeichnet, dass** die verriegelungseinrichtung (13) am Kopfstück (12) und/oder am Kupplungshalter (11) angeordnet ist.

21. Warneinrichtung für eine Anhängerkupplung (10), die ein Kopfstück (12) zum lösbaren Befestigen eines Anhängers aufweist, **dadurch gekennzeichnet,**
- **dass** sie mindestens einen Sensor (36) zum Ermitteln einer Verriegelungsstellung einer Verriegelungseinrichtung (13) zum Verriegeln des Kopfstücks (12) mit einem an einem Zugfahrzeug (15) befestigbaren Kupplungshalter (11) in Gebrauchslage aufweist, wobei das Kopfstück (12) von dem Kupplungshalter (11) bei Nichtgebrauch entfernbar ist,
- **dass** der mindestens eine Sensor (36) zur Ermittlung der jeweiligen Stellung der Verriegelungseinrichtung (13) einen durch die Verriegelungseinrichtung (13) betätigbaren elektrischen Schalter (37) oder ein Sensorelement aufweist,
- **dass** der mindestens eine Sensor (36) am Kopfstück (12) oder am Kupplungshalter (11) befestigbar ist,
- **dass** der mindestens eine Sensor (36) zur Versorgung mit elektrischem Strom eine elektrische Stromquelle (41) aufweist oder dem mindestens einen Sensor (36) eine externe elektrische Stromquelle zugeordnet ist, und
- **dass** durch den mindestens einen Sensor (36) im an der Anhängekupplung befestigten Zustand eine optische und/oder akustische Warnung erzeugbar ist, wenn sich die Verriegelungseinrichtung (13) bei in Gebrauchslage am Kupplungshalter (11) befindlichem Kopfstück (12) außerhalb der Verriegelungsstellung befindet.

## Claims

1. Trailer coupling with a head section (12) for releasably attaching a trailer, wherein the head section (12) can be located on a coupling holder (11) mountable on a towing vehicle (15) in order to adopt a position of use and can be removed from the coupling holder (11) when not in use, and wherein the trailer coupling is provided with a locking device (13) for locking the head section (12) to the coupling holder (11) in the position of use, **characterised in that** it is provided with an alarm device with at least one sensor (36) for detecting the locked position of the locking device (13), **in that** the at least one sensor (36) has an electric power supply (41) for supplying power or an external electric power supply is assigned to the at least one sensor (36), and **in that** the at least one sensor (36) is capable of generating a visual and/or audible warning if the locking device (13) is outside the locking position while the head section (12) is in its position of use on the coupling holder (11).

2. Trailer coupling according to claim 1, **characterised in that** the power supply (41) includes a long-life battery, in particular a lithium battery.

3. Trailer coupling according to claim 1 or 2, **characterised in that** the head section (12) can be plugged to or swivelled onto or plugged and swivelled onto the coupling holder (11) to adopt its position of use.

4. Trailer coupling according to any of the preceding claims, **characterised in that** it is provided with an activating device (42) for activating the at least one sensor (36) when the head section (12) is in its position of use on the coupling holder (11).

5. Trailer coupling according to claim 4, **characterised in that** the at least one sensor (36) can be connected to the power supply (41) for activation by the activating device (42) and disconnected from the power supply (41) for deactivation.

6. Trailer coupling according to claim 4 or 5, **characterised in that** the activating device (42) includes a switch (44) actuated by the coupling holder (11), which is actuated when the head section (12) is in its position of use on the coupling holder (11) even if the locking device (13) is outside the locked position.

7. Trailer coupling according to any of claims 4 to 6, **characterised in that** the activating device (42) includes an inclination switch (43) for detecting the inclination of the head section (12), wherein the inclination switch (43) activates the at least one sensor (36) in an inclination range of the head section (12) in which the head section (12) in its position of use on the coupling holder (11) is located in a typical use of the trailer coupling (10).

8. Trailer coupling according to claim 7, **characterised in that** the inclination range is approximately 30 degrees, and **in that** the head section (12) in its position of use on the coupling holder (11) is located in the central position of the inclination range when the towing vehicle (15) stands on a horizontal plane.

9. Trailer coupling according to any of the preceding claims, **characterised in that** the at least one sensor (36) can be actuated by a control element (25), in particular by a locking shaft (28), of the locking device (13), wherein the control element (35) actuates the at least one sensor (36) in the locking position of the locking device (13).

10. Trailer coupling according to claim 9, **characterised in that** the at least one sensor (36) can be actuated by the axial adjustment (30, 31) of the control element (25).

11. Trailer coupling according to claim 9, **characterised in that** the control element (25) is a locking shaft (28) passing through the head section (12), **in that** a handling device (29) for operating the locking shaft (28) is located at one end of the locking shaft (28), while the at least one sensor (36) is located at the other end, and **in that** the at least one sensor (36) is actuated by the axial adjustment of the locking shaft (28).

12. Trailer coupling according to any of the preceding claims, **characterised in that** the at least one sensor (36) includes an electric switch (37) actuated by the locking device (13).

13. Trailer coupling according to any of the preceding claims, **characterised in that** the switch (37) is a normally closed switch which opens in the locked position of the locking device (13) to switch off the alarm.

14. Trailer coupling according to any of the preceding claims, **characterised in that** it is provided with an alarm generator (45), in particular a sound generator or a warning light assembly, for generating the alarm.

15. Trailer coupling according to claim 14, **characterised in that** the alarm generator (45) includes a buzz or howl generator and/or a speech generator.

16. Trailer coupling according to claim 14 or 15, **characterised in that** the alarm generator (45) includes a warning light and/or an LED assembly.

17. Trailer coupling according to any of the preceding claims, **characterised in that** a remote output device located on and in particular within the towing vehicle for outputting the visual and/or audible warning is assigned to the alarm device.

18. Trailer coupling according to any of the preceding claims, **characterised in that** the at least one sensor (36) is mounted or designed for mounting on the head section (12) or on the coupling holder (11).

19. Trailer coupling according to any of the preceding claims, **characterised in that** the alarm device is designed as a module suitable for mounting on the head section (12).

20. Trailer coupling according to any of the preceding claims, **characterised in that** the locking device (13) is mounted on the head section (12) and/or on the coupling holder (11).

21. Alarm device for a trailer coupling (10) comprising a head section (12) for releasably attaching a trailer, **characterised in that**
- it is provided with at least one sensor (36) for detecting a locked position of a locking device (13) for locking the head section (12) to a coupling holder (11) attached to a towing vehicle (15) in the position of use, wherein the head section (12) can be removed from the coupling holder (11) when not in use,
- **in that** the at least one sensor (36) for detecting the current position of the locking device (13) includes an electric switch (37) or a sensor element actuated by the locking device (13),
- **in that** the at least one sensor (36) can be mounted on the head section (12) or on the coupling holder (11),
- **in that** the at least one sensor (36) has an electric power supply (41) for supplying power or an external electric power supply is assigned to the at least one sensor (36), and
- **in that** a visual and/or audible warning can be generated by the at least one sensor (36) in the mounted state, if the locking device (13) is outside the locked position while the head section (12) is in its position of use on the coupling holder (11).

## Revendications

1. Attelage de remorque, avec un élément de tête (12) pour la fixation amovible d'une remorque, l'élément de tête (12) étant susceptible d'être disposé sur un support de d'attelage (11) qui se fixe sur un véhicule tracteur (15), pour adopter une position d'utilisation et susceptible d'être retiré du support d'attelage (11) lorsqu'il n'est pas utilisé, et l'attelage de remorque comportant un dispositif de verrouillage (13) pour verrouiller l'élément de tête (12) avec le support d'attelage (11) dans la position d'utilisation, **caractérisé en ce qu'**il comporte un dispositif d'avertissement avec au moins un capteur (36), pour déterminer la position de verrouillage du dispositif de verrouillage (13), **en ce que**, pour l'alimentation en courant électrique, l'au moins un capteur (36) comporte une source de courant électrique (41) ou que l'au moins un capteur (36) est associé à une source de courant électrique externe et que l'au moins un capteur (36) est susceptible de délivrer un avertissement optique et/ou acoustique, lorsque le dispositif de verrouillage (13) se trouve hors de la position de verrouillage, alors que l'élément de tête (12) est en position d'utilisation sur le support d'attelage (11).

2. Attelage de remorque selon la revendication 1, **caractérisé en ce que** la source de courant électrique (41) contient une batterie longue durée, notamment une batterie au lithium.

3. Attelage de véhicule selon la revendication 1 ou 2, **caractérisé, en ce que** pour adopter la position d'utilisation, l'élément de tête (12) est enfichable sur le support de d'attelage (11) ou **en ce qu'**il est enfichable ou pivotant, ou enfichable et pivotant.

4. Attelage de remorque selon l'une quelconque des revendications précédentes, **caractérisé en ce qu'**il comporte un dispositif d'activation (42), pour l'activer l'au moins un capteur (36), lorsque l'élément de tête (12) est en position d'utilisation sur le support de d'attelage (11).

5. Attelage de remorque selon la revendication 4, **caractérisé en ce que** pour l'activation, l'au moins un capteur (36) est susceptible d'être relié avec la source de courant électrique (41) et pour la commutation en mode inactif, il est susceptible d'être isolé de la source de courant électrique (41) par le dispositif d'activation (42).

6. Attelage de remorque selon la revendication 4 ou 5, **caractérisé en ce que** le dispositif d'activation (42) contient un interrupteur (44) susceptible d'être actionné par le support de d'attelage (11), qui est actionné lorsque l'élément de tête (12) est en position d'utilisation sur le support de d'attelage (11), même si le dispositif de verrouillage (13) se trouve hors de la position de verrouillage.

7. Attelage de remorque selon l'une quelconque des revendications 4 à 6, **caractérisé en ce que** le dispositif d'activation (42) comporte un interrupteur d'inclinaison (43) pour détecter l'inclinaison de l'élément de tête (12), l'interrupteur d'inclinaison (43) activant l'au moins un capteur (36) dans une plage d'inclinaison de l'élément de tête (12), dans laquelle se trouve l'élément de tête (12) lorsqu'il est en position d'utilisation sur le support de d'attelage (11), dans le cas d'une utilisation typique de l'attelage de remorque (10).

8. Attelage de remorque selon la revendication 7, **caractérisé en ce que** la plage d'inclinaison est d'environ 30 degrés et **en ce que**, lorsque l'élément de tête (12) se trouve en position d'utilisation sur le support de d'attelage (11), il se trouve dans la position médiane de la plage d'inclinaison, lorsque le véhicule tracteur (15) se trouve sur un plan horizontal.

9. Attelage de remorque selon l'une quelconque des revendications précédentes, **caractérisé en ce que** l'au moins un capteur (36) est susceptible d'être actionné par un élément de commande (25), notamment par un arbre de verrouillage (28) du dispositif de verrouillage (13), l'élément de commande (25) actionnant l'au moins un capteur (36), dans la position de verrouillage du dispositif de verrouillage (13).

10. Attelage de remorque selon la revendication 9, **caractérisé en ce que** l'au moins un capteur (36) est susceptible d'être actionné par un réglage axial (30, 31) de l'élément de commande (25).

11. Attelage de remorque selon la revendication 9, **caractérisé en ce que** l'élément de commande (25) est un arbre de verrouillage (28) traversant l'élément de tête (12), **en ce que** sur l'une des extrémités de l'arbre de verrouillage (28) est disposée une manette (29), pour actionner l'arbre de verrouillage (28) et **en ce que** sur son autre extrémité est disposé l'au moins un capteur (36) et **en ce que** l'au moins un capteur (36) est susceptible d'être actionné par un réglage axial de l'arbre de verrouillage (28).

12. Attelage de remorque selon l'une quelconque des revendications précédentes, **caractérisé en ce que** l'au moins un capteur (36) comporte un interrupteur électrique (37) susceptible d'être actionné par le dispositif de verrouillage (13).

13. Attelage de remorque selon la revendication 12, **caractérisé en ce que** l'interrupteur (37) est un interrupteur d'ouverture, qui s'ouvre dans la position de verrouillage du dispositif de verrouillage (13), pour mettre l'avertissement hors service.

14. Attelage de remorque selon l'une quelconque des revendications précédentes, **caractérisé en ce que** pour délivrer l'avertissement, il comporte un générateur d'avertissement (45), notamment un générateur sonore ou un agencement de lampes témoins.

15. Attelage de remorque selon la revendication 14, **caractérisé en ce que** le générateur d'avertissement (45) est un générateur de tonalité ou de sifflement et/ou un générateur vocal.

16. Attelage de remorque selon la revendication 14 ou 15, **caractérisé en ce que** le générateur d'avertissement (45) est une lampe témoin et/ ou un agencement de diodes électroluminescentes.

17. Attelage de remorque selon l'une quelconque des revendications précédentes, **caractérisé en ce que**, un dispositif de sortie à distance, disposé sur le véhicule tracteur, notamment à l'intérieur du véhicule tracteur est associé au dispositif d'avertissement, pour délivrer l'avertissement optique et/ou acoustique.

18. Attelage de remorque selon l'une quelconque des revendications précédentes, **caractérisé en ce que** l'au moins un capteur (36) est ou doit être disposé sur l'élément de tête (12) ou sur le support de d'attelage (11).

19. Attelage de remorque selon l'une quelconque des revendications précédentes, **caractérisé en ce que** le dispositif d'avertissement en conçu sous la forme d'un module, susceptible d'être disposé sur l'élément de tête (12).

20. Attelage de remorque selon l'une quelconque des revendications précédentes, **caractérisé en ce que** le dispositif de verrouillage (13) est disposé sur l'élément de tête (12) ou sur le support de d'attelage (11).

21. Dispositif d'avertissement pour un attelage de remorque (10), comportant un élément de tête (12) pour la fixation amovible d'une remorque, **caractérisé en ce que**
- il comporte au moins un capteur (36) pour déterminer une position de verrouillage d'un dispositif de verrouillage (13), pour le verrouillage de l'élément de tête (12), avec un support de d'attelage (11) susceptible d'être fixé sur un véhicule tracteur (15), en position d'utilisation, l'élément de tête (12) étant susceptible de se retirer du support de d'attelage (11), en cas de non utilisation,
- **en ce que** l'au moins un capteur (36) pour déterminer la position du dispositif de verrouillage (13) comporte un interrupteur électrique (37) ou un élément de capteur, susceptible d'être actionné par le dispositif de verrouillage (13),
- **en ce que** l'au moins un capteur (36) est susceptible d'être fixé sur l'élément de tête (12) ou sur le support de d'attelage (11),
- **en ce que**, pour l'alimentation avec du courant électrique, l'au moins un capteur (36) comporte une source de courant électrique (41) ou **en ce que** l'au moins un capteur (36) est associée à une source de courant électrique externe, et
- **en ce que** dans la position fixée sur l'attelage de remorque, l'au moins un capteur (36) est susceptible de délivrer un avertissement optique et/ou acoustique, lorsque le dispositif de verrouillage (13) se trouve à l'extérieur de la position de verrouillage, alors que l'élément de tête (12) est en position d'utilisation sur le support de d'attelage (11).
